# EUROPÄISCHE PATENTSCHRIFT

(11) **EP 1 326 231 B1**
(45) Veröffentlichungstag und Bekanntmachung des Hinweises auf die Patenterteilung: **11.05.2005**
(21) Anmeldenummer: 02025981.8
(22) Anmeldetag: 21.11.2002
(51) Int. Cl.: G10L 15/00, G06F 17/27

(54) **Sprachidentifizierung**
Language identification
Identification du langage

(30) Priorität: 05.01.2002 DE 10200249
(43) Veröffentlichungstag der Anmeldung: 09.07.2003
(73) Patentinhaber: Deutsche Telekom AG, 53113 Bonn (DE)
(72) Erfinder: Bertram, Lutz, 12159 Berlin (DE); Hoepelman, Jaap, Prof. Dr., 71272 Renningen (DE); Trinkel, Marian, Dipl.-Ing., 52372 Kreuzau OT Untermaubach (DE)

(56) Entgegenhaltungen:
- EP-A- 0 672 988
- EP-A- 0 889 626
- EP-A- 1 014 277
- PARRIS E S ET AL: "Language identification using multiple knowledge sources" ACOUSTICS, SPEECH, AND SIGNAL PROCESSING, 1995. ICASSP-95., 1995 INTERNATIONAL CONFERENCE ON DETROIT, MI, USA 9-12 MAY 1995, NEW YORK, NY, USA,IEEE, US, 9. Mai 1995 (1995-05-09), Seiten 3519-3522, XP010152106 ISBN: 0-7803-2431-5
- LUND M A ET AL: "TWO NOVEL LANGUAGE MODEL ESTIMATION TECHNIQUES FOR STATISTICAL LANGUAGE IDENTIFICATION" 4TH EUROPEAN CONFERENCE ON SPEECH COMMUNICATION AND TECHNOLOGY. EUROSPEECH '95. MADRID, SPAIN, SEPT. 18 - 21, 1995, EUROPEAN CONFERENCE ON SPEECH COMMUNICATION AND TECHNOLOGY. (EUROSPEECH), MADRID: GRAFICAS BRENS, ES, Bd. 2 CONF. 4, 18. September 1995 (1995-09-18), Seiten 1363-1366, XP000854954

## Beschreibung

Die vorliegende Erfindung betrifft ein Verfahren zur Erlangung von Information über die Herkunft, insbesondere die Sprache, den Dialekt und/oder den Urheber, eines gesprochenen Originaltextes oder Textfragmentes. Die Erfindung betrifft auch ein System zur Durchführung des Verfahrens.

Generell kann eine solche Information über einen Originaltext erlangt werden, indem eine der Sprache kundige Person diesen Text begutachtet. Zudem ist die automatische Untersuchung gesprochener Texte aus der Computer gestützten Spracherkennung in einigen Anwendungen bekannt. Beispielsweise ist es bekannt, mit Programmen zur Spracherkennung einen gesprochenen Text, der auch nur aus einem Wort (Textfragment) bestehen kann und der als analoges Signal den Computer erreicht, in digitale Information umzusetzen, um ihn wie im Falle von Diktierprogrammen in ein Schriftstück zu konvertieren oder mit ihm eine Menueführung zu organisieren. Da die Programme nur zur Erkennung einzelner Sprachen taugen, ist es jedoch nur bedingt möglich, die Herkunft eines Originaltextes mit einem solchen Programm zu ermitteln. Ein Text unbekannter Herkunft muß erst von Übersetzungsprogrammen einiger Sprachen bearbeitet werden, bis das Programm "paßt" und die Sprache feststellbar ist. Eine solche Analyse geht mit einem großen rechnerischen Aufwand einher und ist bei Texten, die aus einer Vielzahl möglicher Quellen stammen können, nahezu unmöglich durchzuführen.

Der Artikel "Language identification using multiple knowledge sources", Parris und Carey, ICASSP 1995, offenbart ein Verfahren zur Sprachkerkunfts bestimmung, worin ein Phonenhistogramm mit Phonenhistogrammen mehrerer verschiedensprachiger Spracherkenner verglichen wird.

Aufgabe der Erfindung ist es nunmehr, ein Verfahren zu schaffen, das sich mit einfachen und kostengünstigen Mitteln umsetzen läßt und mit dem sich die Herkunft eines beliebigen Textes mit großer Zuverlässigkeit herausfinden läßt. Zudem ist es Aufgabe der Erfindung, ein System zur Umsetzung des Verfahrens zu schaffen.

Diese Aufgaben werden durch ein Verfahren nach Anspruch 1 und ein System nach Anspruch 9 gelöst.

Der wesentliche Grundgedanke der Erfindung liegt darin, ein zur Erkennung und Umsetzung eines gesprochenen Textes geeignetes Programm, wie beispielsweise ein Diktierprogramm, zu "mißbrauchen", das Ergebnis der Umsetzung statistisch aufzubereiten, um Charakteristika der Sprache, in der der Text gesprochen ist, zu ermitteln, und die Charakteristika mit denen anderer Sprachen zu vergleichen. Der in einer zu bestimmenden Sprache gesprochene Text wird gewissermaßen durch das Spracherkennungsprogramm in Einheiten gegliedert und das Ergebnis in einem Spektrum dargestellt. Dabei erzeugt jede Sprache unabhängig vom Inhalt des Textes ein für diese Sprache typisches Spektrum mit desselben Charakteristik ("Zipfsches Gesetz"). Ein Vergleich der Charakteristika führt also zu der Sprache. Jede Sprache hat somit ihren Fingerabdruck, an dem sich jeder darin ausgedrückten Text identifizieren läßt.

Der Text wird erfindungsgemäß zunächst vermittels des auf einem Computer realisierten Spracherkennungsprogramm in kleine Einheiten, beispielsweise in Worte, Wortfragmente, Buchstaben oder Laute, geteilt. Dabei sind die Einheiten insofern festgelegt von den Fähigkeiten des Programmes, als ein Programm den Text wegen der unterschiedlichen Verständnisprobleme in andere Einheiten teilt als ein anderes Programm. Letztendlich gibt das Programm die Einheiten aus, die es in dem Text identifizieren konnte. Dabei wird das Programm zwar versuchen diesen Einheiten einen Sinn zuzuordnen, da es auf eine bestimmte Sprache trainiert ist. Da der Text jedoch in einer anderen Sprache gesprochen ist, muß das Programm an diesem Versuch scheitern und für das Programm sinnlose Einheiten ausgeben. Die Hauptsache ist dabei, daß das Programm einen Text immer in der gleichen Weise zerpflückt. Bei diesem Vorgehen werden eine Vielzahl sich ständig wiederholender Einheiten, beispielsweise eine Vielzahl von Buchstaben, ermittelt, wobei diese Einheiten über den ganzen Text oder über die untersuchten Teile des Textes in einem Spektrum aufaddiert werden. Das Spektrum, also die Anzahl der jeweils entdeckten Einheiten, kann mit einem gespeicherten Standard-Spektrum eines Textes bekannter Herkunft verglichen werden, wobei aus einer festgestellten Übereinstimmung auf die Herkunft des Originaltextes geschlossen werden kann.

Mit diesem Verfahren lassen sich beliebige gesprochene Texte auf einfache Weise automatisch einer bestimmten Sprache zuordnen. Nachdem eine solche Zuordnung erfolgt ist, kann eine weitere Textverarbeitung, beispielsweise eine Übersetzung des Textes, stattfinden. Das Verfahren läßt sich bequem und kostengünstig mit den bekannten Programmen umsetzen,-die auch heute schon auf vorhandenen Computern laufen. Dabei können Computer verwendet werden, die an Telekommunikations-Netzen angeschlossen sind. Mit diesen lassen sich über das Netz geführte Anrufe hinsichtlich der Sprache des Anrufers identifizieren und kategorisieren. Nach der Identifikation kann eine gezielte Übersetzung erfolgen. Eine solche Identifikation konnte bislang nur dadurch automatisiert werden, daß der Text von einer Vielzahl von Programmen solange untersucht wurde, bis das "passende" also das eine verstehende Programm gefunden wurde. Diese Prozedur bedeutete einen immensen rechnerischen Aufwand, der nun entfällt.

Besonders vorteilhaft ist, daß das Programm tatsächlich nur zur Erkennung einer speziellen Sprache, beispielsweise der deutschen Sprache, mächtig sein muß. Solche Programme sind bekannt und kommerziell erhältlich. Dieses Programm nimmt nun die Transformation nach entsprechenden Regeln vor. Wie schon angedeutet, ist es vorteilhaft, wenn das Programm keine Rücksicht auf Fehler in der Transformation nimmt, die das Programm an sich melden würde, wenn es denn eine Verletzung der ihm implementierten Regeln erkennt. Statt dessen soll es den Text so lange unverstanden herunterbrechen, bis es zu den für das Programm kleinsten analysierbaren Einheiten gelangt. Mit diesen Einheiten, die im Fall eines die Sprache Deutsch verstehenden Programmes letztendlich einzelne Buchstaben sind, werden dann die Spektren gefüllt.

Da es bei der Programmierung Standards bezüglich der Digitalisierung kleinster Einheiten gibt, ist es vorteilhaft, einen solchen Standard zu verwenden. So ist es besonders zu bevorzugen, wenn das Programm die aufgenommene Sprache in digital übertragbare Zeichen nach einem genormten Code, insbesondere dem ASCII-Code, wandelt. Diese Zeichen können dann in ein Spektrum sortiert werden.

Wie schon dargelegt, wird aus dem Vergleich des aufgenommenen Spektrums mit einem gespeicherten Standard-Spektrum auf die Sprache geschlossen. In einer vorteilhaften Ausführungsform kann auch die Nationalität oder sogar die Identität des Sprechers bestimmt werden. Dazu bedarf es einer Differenzierung der in den Sprachen möglichen Akzente. So kann beispielsweise ein die deutsche Sprache verstehendes Programm einen Franzosen identifizieren, der gerade Englisch spricht, da sich ein Spektrum des "französischen" Englisch von dem "britischen" Englisch in Details unterscheiden wird.

Voraussetzung für den Vergleich von Spektren ist das Vorhandensein von Standard-Spektren. Zu deren Erzeugung ist es vorteilhaft, Texte verschiedener Herkunft mittels des Programmes zur Spracherkennung zu analysieren und die Spektren zu speichern. Diese "Initialisierung" des Programmes kann automatisch erfolgen, indem dem Programm eine Vielzahl von Texten unterschiedlicher Sprachen vorgespielt werden. Dabei sollten die Texte möglichst lang sein, um eine ausreichende Statistik und jeweils ein repräsentatives Spektrum zu erhalten. Da die untersuchten Textstellen mitunter vergleichsweise kurz sind, ist es vorteilhaft, beim Vergleich des aus dem Text erzeugten Spektrums mit dem Standard-Spektrum statistische Korrekturen zu berücksichtigen. Dadurch wird die Aussagekraft des Vergleiches und damit die Richtigkeit des Ergebnisses erhöht.

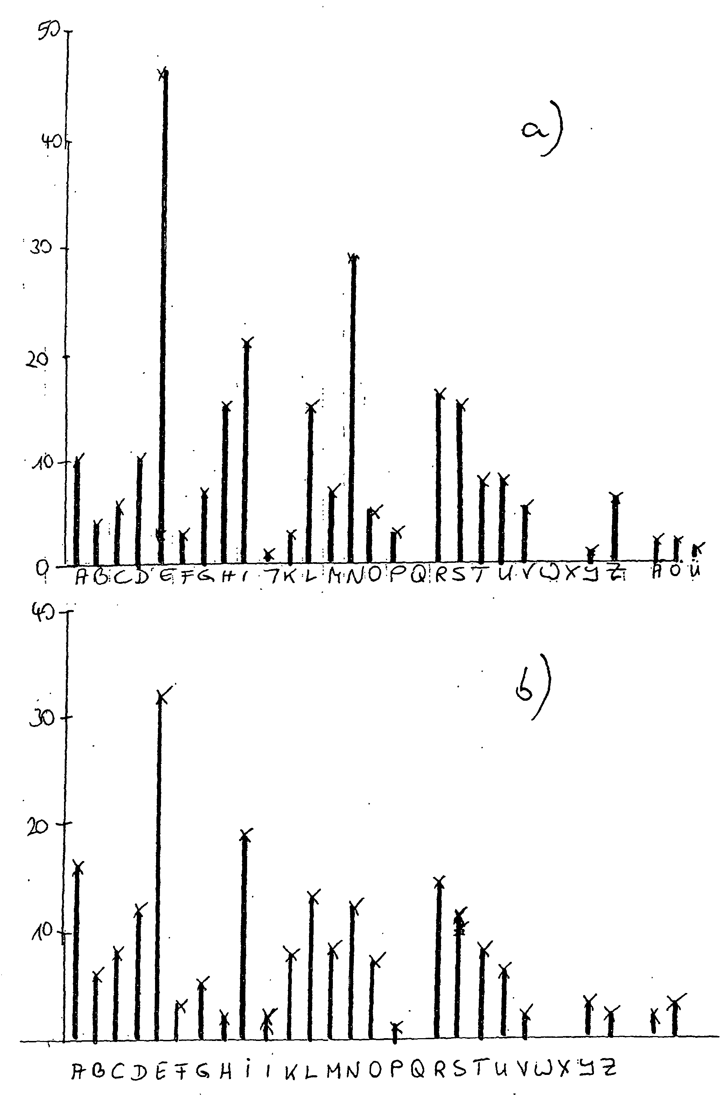

Das erfindungsgemäße Verfahren wird nachfolgend anhand der Figur näher beschrieben:

In der Figur sind zwei Spektren a) und b) gezeigt. Diese sind dadurch entstanden, daß ein Text gleichen Inhalts einmal in der deutschen Sprache a) und einmal in der türkischen Sprache b) einem Spracherkennungsprogramm, das englischen Text übersetzt, zugeführt wurde. Das Programm versucht sinntragende Einheiten der englischen Sprache zu finden und bricht den Text letztendlich bis auf das Niveau von Buchstaben herunter. Die Verteilung der Buchstaben, also ihr Vorkommen, ist jeweils in einem Spektrum aufgetragen. Trotz der Kürze des Textes, der wahllos aus einer Tageszeitung herausgegriffen wurde, ist der Unterschied klar zu erkennen. Die deutsche Sprache enthält signifikant mehr "n" und "e". Anhand der Verteilung läßt sich nach Vergleich aus dem Spektrum a) herauslesen, daß der Text in Deutsch gesprochen, während das Spektrum b) einen türkischen Fingerabdruck hat.

Ein System zur Umsetzung des Verfahrens weist vorteilhafterweise einen Computer auf, der an ein Telekommunikationsnetz angeschlossen ist und auf dem ein Programm zur Sprachanalyse realisiert ist. Dieses hat ein Modul, das einen dem Programm in einer fremden Sprache zugeführten Text in programmspezifisch kleinste Einheiten teilt, die jeweiligen Häufigkeiten zählt und das so entstandene Spektrum zur Bestimmung der Sprache mit Standard-Spektren vergleicht. Dabei sind die "programmspezifisch kleinsten Einheiten" so zu verstehen, daß das Modul so lange versucht Textbestandteile zu identifizieren, bis es die erste ihm bekannte Einheit findet. So würde ein Deutsch verstehendes Programm zunächst versuchen Worte in einem russischen Text zu verstehen. Dies ist ihm das nicht möglich; es wird jedoch einige Laute als ihm bekannte kleinste Einheiten identifizieren. Letztendlich wird die Ebene der Buchstaben erreicht sein, die das Programm verstehen kann.

## Patentansprüche

1. Verfahren zur automatischen Erlangung von Information über die Herkunft, insbesondere die Sprache, den Dialekt und/oder den Urheber, eines gesprochenen Textes, worin
- vermittels eines auf einem Computer realisierten Programmes zur Spracherkennung, welches auf eine einzige bestimmte Sprache trainiert ist, der in einer fremden Sprache gesprochene Text in Einheiten geteilt wird,
- die jeweiligen Hänfigkeiten der sich wiederholenden Einheiten über den gesamten Text oder über Teile des Textes gezählt werden, **dadurch gekennzeichnet, daß** das so erzeugte Spektrum welches die Häufigkeit der einzelnen Einheiten repräsentiert, ausschließlich mit gespeicherten Standard-Spektren von gesprochenen Texten verschiedener bekannter Herkunft verglichen wird, welche mit demselben Programm zur Spracherkennung in der bestimmten Sprache erzeugt wurden, wobei aus einer festgestellten Übereinstimmung auf die Herkunft des gesprochenen Textes geschlossen wird.

2. Verfahren nach Anspruch 1,
**dadurch gekennzeichnet, dass** die sprachspezifischen Einheiten Buchstaben sind.

3. Verfahren nach einem der vorherigen Ansprüche,
**dadurch gekennzeichnet, daß** daß keine Rücksicht auf Fehler in der Transformation genommen wird, die das Programm meldet, wenn es eine Verletzung der Regeln erkennt.

4. Verfahren nach einem der vorherigen Ansprüche,
**dadurch gekennzeichnet,** da**ß** das Programm die aufgenommene Sprache in digital übertragbare Zeichen nach einem genormten Code, insbesondere dem ASCII-Code, wandelt.

5. Verfahren nach einem der vorherigen Ansprüche,
**dadurch gekennzeichnet, daß** aus dem Vergleich des Spektrums mit dem Standard-Spektrum auf die Nationalität des Sprechers geschlossen wird.

6. Verfahren nach einem der vorherigen Ansprüche,
**dadurch gekennzeichnet, daß** zur Erzeugung der Standard-Spektren Texte verschiedener Herkunft mittels des Programmes zur Spracherkennung analysiert werden.

7. Verfahren nach einem der vorherigen Ansprüche,
**dadurch gekennzeichnet, daß** beim Vergleich des Spektrums mit einem Standard-Spektrum statistische Korrekturen berücksichtigt werden.

8. Verfahren nach einem der vorherigen Ansprüche,
**dadurch gekennzeichnet, daß** zum Vergleich des Spektrums mit einem Standard-Spektrum das Zipfsche Gesetzt berücksichtigt wird.

9. System zur Umsetzung des Verfahrens nach einem der vorherigen Ansprüche aufweisend einen Computer, der an ein Telekommunikations netz angeschlossen ist und auf dem ein Programm zur Spracherkennung realisiert ist, welches auf eine einzige bestimmte Sprache trainiert ist, **gekennzeichnet durch** ein Modul, das vermittels des Programmes einen in einer fremden Sprache gesprochenen Text in programmspezifisch kleinste Einheiten teilt, die jeweiligen Häufigkeiten zählt und das so erzeugte Spektrum zur Bestimmung der Herkunft ausschließlich mit Standard-Spektren vergleicht, die mit demselben Programm zur Spracherkennung in der bestimmten Sprache für gesprochene Texte verschiedener bekannter Herkunft erzeugt wurden, wobei aus einer festgestellten Übereinstimmung auf die Herlauft gesprochenen Textes geschlossen wird.

## Claims

1. Method for automatically obtaining information on the origin, more particularly the language, dialect and/or author, of a spoken text, wherein
- by means of a voice recognition program realized on a computer, said voice recognition program having been trained for one single defined language, the text spoken in a foreign language is divided into units;
- the respective frequencies of the recurring units are counted over the entire text or over parts of the text, **characterized in that**
- the thus produced spectrum, representing the frequency of the individual units, is compared exclusively with stored standard spectra of spoken texts of different known origin produced in the defined language with the same voice recognition program, a detected match serving to infer the origin of the spoken text.

2. Method according to claim 1,
**characterized in that** the language-specific units are letters.

3. Method according to any one of the preceding claims,
**characterized in that** no account is taken of errors in transformation reported by the program when it detects a breach of the rules.

4. Method according to any one of the preceding claims,
**characterized in that** the program converts the recorded language into digitally transferable characters according to a standardized code, more particularly the ASCII code.

5. Method according to any one of the preceding claims,
**characterized in that** the comparison of the spectrum with the standard spectrum serves to infer the nationality of the speaker.

6. Method according to any one of the preceding claims,
**characterized in that**, in order to produce the standard spectra, texts of different origin are analyzed by means of the voice recognition program.

7. Method according to any one of the preceding claims,
**characterized in that**, during the comparison of the spectrum with a standard spectrum, account is taken of statistical corrections.

8. Method according to any one of the preceding claims,
**characterized in that**, for the comparison of the spectrum with a standard spectrum, account is taken of Zipfs law.

9. System for implementation of the method according to any one of the preceding claims, comprising a computer connected to a telecommunications network, a voice recognition program being realized on said computer, said voice recognition program having been trained for one single defined language,
**characterized by** a module, wherein said module, by means of the program, divides text spoken in a foreign language into program-specifically smallest units, counts the respective frequencies and, in order to determine the origin, compares the thus produced spectrum exclusively with standard spectra of spoken texts of different known origin produced in the defined language with the same voice recognition program, a detected match serving to infer the origin of the spoken text.

## Revendications

1. Procédé destiné à l'obtention automatique d'informations sur l'origine, notamment la langue, le dialecte et/ou l'auteur d'un texte parlé, lequel procédé :
- partage en unités le texte parlé dans une langue étrangère, au moyen d'un programme de reconnaissance de la parole, exécuté sur un ordinateur, ledit programme étant configuré sur une seule langue définie,
- compte les occurrences respectives des unités se répétant sur l'ensemble du texte ou sur des parties dudit texte,
**caractérisé en ce que**
le spectre ainsi généré et représentant la fréquence des différentes unités est comparé exclusivement à des spectres standard enregistrés de textes parlés ayant des origines diverses connues, lesdits spectres ayant été générés à l'aide du même programme de reconnaissance de la parole dans la langue en question, une concordance constatée permettant de déduire l'origine du texte parlé.

2. Procédé selon la revendication 1,
**caractérisé en ce que** les unités spécifiques de langue sont des lettres.

3. Procédé selon l'une des revendications précédentes,
**caractérisé en ce qu**'il n'est pas tenu compte des erreurs survenant durant la transformation et que le programme signale lorsqu'il détecte une infraction aux règles.

4. Procédé selon l'une des revendications précédentes,
**caractérisé en ce que** le programme convertit la langue enregistrée en caractères pouvant être transmis numériquement selon un code standardisé, notamment selon le code ASCII.

5. Procédé selon l'une des revendications précédentes,
**caractérisé en ce que** la comparaison du spectre avec le spectre standard permet de déduire la nationalité du locuteur.

6. Procédé selon l'une des revendications précédentes,
**caractérisé en ce que,** pour générer les spectres standard, des textes d'origines diverses sont analysés à l'aide du programme de reconnaissance de la parole.

7. Procédé selon l'une des revendications précédentes,
**caractérisé en ce que** des corrections statistiques sont prises en compte lors de la comparaison du spectre avec un spectre standard.

8. Procédé selon l'une des revendications précédentes,
**caractérisé en ce que** la loi de Zipf est prise en considération lors de la comparaison du spectre avec un spectre standard.

9. Système de mise en oeuvre du procédé selon l'une des revendications précédentes, présentant un ordinateur connecté à un réseau de télécommunication et sur lequel un programme de reconnaissance de la parole est exécuté, ledit programme étant configuré sur une seule langue définie,
**caractérisé en ce qu'**un module, à l'aide du programme, partage en unités minimales spécifiques au programme le texte parlé dans une langue étrangère compte les occurrences respectives et compare le spectre ainsi généré et destiné à déterminer l'origine, exclusivement à des spectres standards qui ont été générés à l'aide du même programme de reconnaissance de la parole dans la langue en question pour des textes parlés d'origines diverses mais connues, une concordance constatée permettant de déduire l'origine du texte parlé.
